# FASCICULE DE BREVET EUROPEEN

(11) **EP 4 071 394 B1**
(45) Date de publication et mention de la délivrance du brevet: **05.06.2024**
(21) Numéro de dépôt: 22166532.6
(22) Date de dépôt: 04.04.2022
(51) Int. Cl.: F16L 37/088, F16L 37/53, F16L 43/00, F16K 5/06, F16K 31/60, G01F 15/18, E03B 7/07, E03B 7/09

(54) **DISPOSITIF DE RACCORDEMENT MODULABLE POUR POSTE DE COMPTAGE D'EAU**
MODULIERBARE ANSCHLUSSVORRICHTUNG FÜR WASSERZÄHLERSTATIONEN
MODULABLE CONNECTION DEVICE FOR WATER METERING STATION

(30) Priorité: 06.04.2021 FR 2103513
(43) Date de publication de la demande: 12.10.2022
(73) Titulaire: S.A. Persohn, 33430 Bazas (FR)
(72) Inventeur: PERSOHN, Philippe, 33430 SAUVIAC (FR)
(74) Mandataire: Ipside

(56) Documents cités:
- WO-A1-01/11282
- FR-A1- 2 800 401
- GB-A- 2 386 402
- US-A- 4 691 727

## Description

### Domaine technique

La présente invention concerne un perfectionnement aux dispositifs de raccordement notamment pour postes de comptage d'eau.

### Art antérieur

On connaît des dispositifs de raccordement pour compteur d'eau destinés à relier un compteur d'eau à des conduits d'entrée et de sortie du réseau d'eau. Les compteurs d'eau horizontaux comportent une entrée et une sortie filetée à chaque côté du compteur, typiquement disposées au droit l'une de l'autre. D'autre part, les arrivées des conduits d'entrée et de sortie du réseau d'eau sont verticales et perpendiculaires à l'entrée/sortie du compteur. Il est donc nécessaire d'utiliser une robinetterie coudée pour relier ledit compteur au réseau d'eau.

Le raccordement est toutefois délicat car selon les tolérances de fabrication des filetages, il se peut que le vissage complet ne coïncide pas avec une position angulaire correcte des tubulures. Des positions d'installation forcées peuvent conduire à un écrasement des joints de type faciaux pris entre le compteur et la robinetterie, et donc à un risque de fuites et d'une dégradation du joint dans le temps.

Le document FR 2 800 401 A1 propose un dispositif à raccord amovible à clapet commandé pour un réseau d'adduction d'eau, un ensemble de comptage mettant en oeuvre le dispositif.

Le brevet FR 2 850 445 au nom de la demanderesse, propose un dispositif de raccordement optimisé pour compteur d'eau horizontal, dans lequel une robinetterie coudée est raccordée au compteur au moyen d'une bague rotative de liaison permettant de monter la robinetterie selon plusieurs positions angulaires distinctes. Cette bague est visée d'un côté à la sortie ou à l'entrée du compteur et comporte des moyens coopérants de retenue en translation avec la robinetterie selon l'axe de révolution de la bague, ces moyens de retenue autorisant une rotation relative de la robinetterie dans au moins un secteur angulaire.

Si bien le raccordement de la robinetterie est perfectionné, la prise en main par l'installateur peut apparaître complexe lors de ses premières utilisations. De plus, il y a toujours des inconvenants d'installation liés à l'encombrement de la robinetterie coudée présentant une liberté de rotation partielle. En effet, le visage et dévisage de la robinetterie doit se faire par des quarts de tours, ce qui rend fastidieux son procédé d'installation ou de démontage. La présente invention a pour but de remédier à ces inconvenants.

### Exposé de l'invention

Le but de l'invention est de proposer un dispositif de raccordement pour compteur d'eau fiable et rapide en exécution.

À cette fin, l'invention propose un dispositif de raccordement d'eau pour compteur d'eau aux sorties horizontales, selon la revendication 1. Le dispositif comporte au moins une robinetterie comprenant deux parties coudées, chaque partie coudée comportant une extrémité inclinée destinée à son raccordement au compteur ou au réseau d'eau, et une extrémité droite de liaison, dans lequel
- les deux extrémités droites des parties coudées sont reliées entre elles au moyen d'une liaison rotative étanche permettant de moduler une position de la robinetterie ; et
- la robinetterie comporte une position d'utilisation, dite aussi verrouillée dans laquelle les deux extrémités inclinées sont orientées vers un centre axial et vertical du compteur d'eau, et une position d'installation dite aussi ouverte dans laquelle l'une des parties inclinées est orientée vers le centre axial et l'autre partie inclinée est orientée vers un côté opposé audit centre axial.

L'invention propose ainsi une robinetterie comportant une position angulaire modulable pour faciliter son installation. En particulier, sa position ouverte et d'installation permet un raccordement simplifié de la robinetterie aux sorties horizontales du compteur d'eau car cette position empêche le blocage de la robinetterie avec un corps du compteur. La robinetterie peut donc être serrée sur les sorties horizontales du compteur d'eau par un mouvement de rotation simple. Lorsque la robinetterie a été correctement raccordée au compteur d'eau, elle est mise en position verrouillée et d'utilisation pour son raccordement au réseau d'eau.

Avantageusement, la robinetterie comporte au moins une paire de butées sur une face externe de ladite robinetterie, lesdites butées étant configurées pour arrêter et limiter une rotation de la robinetterie en position d'utilisation ou d'installation.

Dans un mode de réalisation, les extrémités droites de la robinetterie sont emboîtées et fixées ensemble au moyen d'une bague de retenue à pression.

Par exemple, l'une des extrémités droites est une extrémité de liaison mâle comportant au moins une première gorge extérieure pour recevoir ladite bague de retenue à pression, et l'autre extrémité droite est une extrémité de liaison femelle comportant au moins une fenêtre permettant d'exposer une section de ladite bague de retenue lorsque lesdites parties coudées sont emboîtées.

Selon un mode de réalisation, l'une des parties coudées de la robinetterie, dite partie coudée supérieure, est destinée à son raccordement au compteur d'eau et son extrémité inclinée est pourvue d'un taraudage.

Selon un mode de réalisation, le dispositif de raccordement comporte un module de liaison au réseau d'eau, et ;
- l'une des parties coudées de la robinetterie dite partie coudée inférieure, est destinée à son raccordement au réseau d'eau et comporte de moyens de raccordement automatiques avec ledit module de liaison dans son extrémité inclinée, et ;
- ledit module comporte une extrémité inclinée recevant l'extrémité inclinée de la partie coudée inférieure de la robinetterie, et une extrémité droite pourvue d'un taraudage destiné à être serrée sur une entrée ou une sortie du réseau d'eau.

La robinetterie comporte au moins une paire de butées coopérant en butée entre elles pour arrêter une rotation entre les parties coudées en position d'utilisation, chaque extrémité droite des parties coudées comportant l'une desdites butées, et dans lequel lesdites butées sont de préférence situées sensiblement face au centre axial du compteur d'eau lorsque la robinetterie est en position d'utilisation.

Selon un mode de réalisation, la robinetterie comporte au moins une deuxième paire de butées coopérant pour arrêter la rotation entre les parties coudées en position d'installation, chaque extrémité droite des parties coudées comportant l'une desdites butées, et dans lequel ladite paire de butées est de préférence située sensiblement opposée au centre axial du compteur d'eau lorsque la robinetterie est en position d'installation.

Selon un mode de réalisation, le dispositif de raccordement d'eau comporte une paire de robinetteries pourvues respectivement d'un module de liaison au réseau d'eau, et dans laquelle ledit dispositif de raccordement comporte un robinet d'arrêt d'eau entre l'une des robinetteries et son module de liaison au réseau d'eau.

Dans un mode de réalisation non limitatif les parties coudées présentent un angle de 90°.

L'invention concerne également un poste d'eau équipé d'un dispositif de raccordement selon l'invention

D'autres avantages, buts et caractéristiques particulières de la présente invention ressortiront de la description qui va suivre, faite dans un but explicatif et nullement limitatif, en regard des dessins annexés.

### Présentation des dessins

[Fig. 1] Une vue générale d'un poste de comptage d'eau selon l'état de la technique.
[Fig. 2] Une vue éclatée et en perspective d'un dispositif de raccordement d'eau selon l'invention.
[Fig. 3] Une vue éclatée et suivant une coupe longitudinale de la robinetterie de l'invention : a) en position verrouillée, et b) en position ouverte.
[Fig. 4] Une vue éclatée et suivant une coupe longitudinale du dispositif de raccordement d'eau selon l'invention.

### Description détaillée des modes de réalisation de l'invention

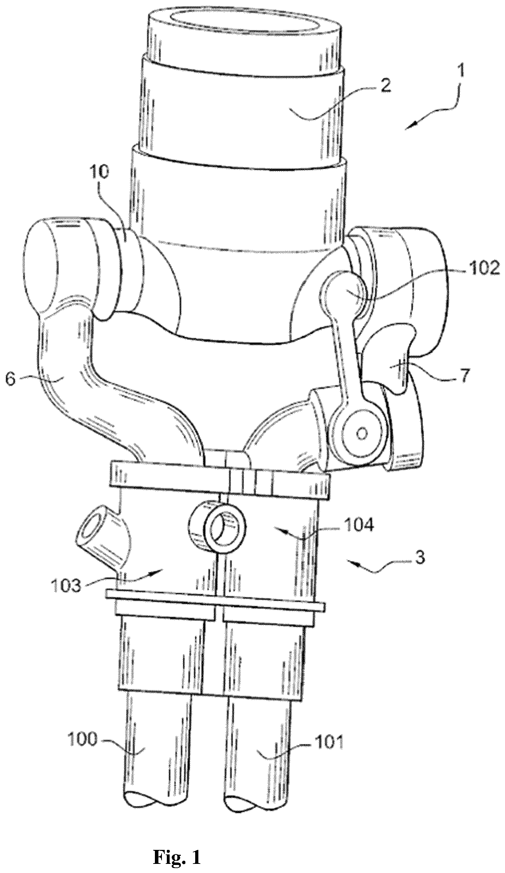

La figure 1 montre un exemple d'un poste de comptage d'eau selon l'état de la technique et comportant un compteur 2, un module 3 de raccordement et des robinetteries 6, 7 de liaison entre le compteur 2 et le module 3. Selon, ce système, les conduites d'arrivée 100 et de départ 101 d'eau sont peu écartées et reçues sur une face inférieure du module. Le module comporte une première chambre 103 reliée vers le bas à la canalisation d'arrivée d'eau et vers le haut à une première robinetterie 6 amenant l'eau au compteur 2. En sortie du compteur, l'eau passe dans une seconde robinetterie 7, éventuellement munie d'un robinet d'arrêt 102, puis passe dans une seconde chambre 104 du module et ressort du poste par la canalisation 101 pour être distribué vers l'abonné.

Dans le système de l'art antérieur fig. 1, le raccordement de la robinetterie doit se faire par des quarts de tours au compteur 2 en raison de l'encombrement d'une partie inférieure de ladite robinetterie. En effet, ladite robinetterie présente un retour se prolongeant vers le centre axial du compteur, et empêchant ladite robinetterie de faire un tour complet lorsqu'elle est visée sur l'entrée ou sortie du compteur 2.

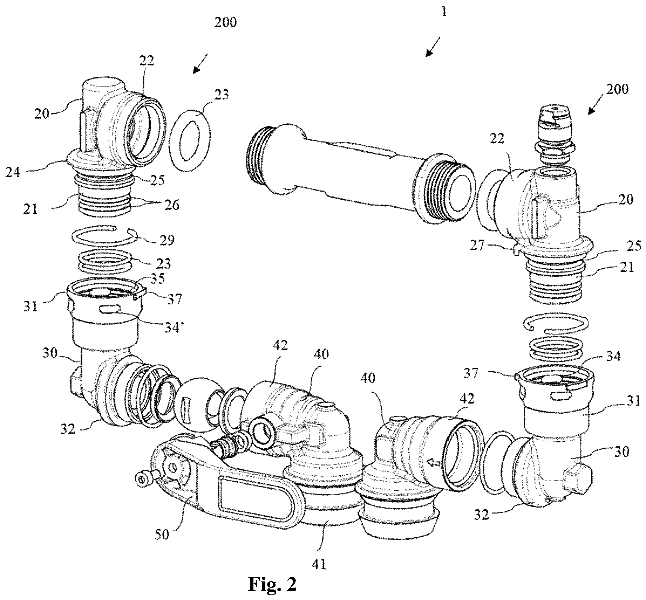

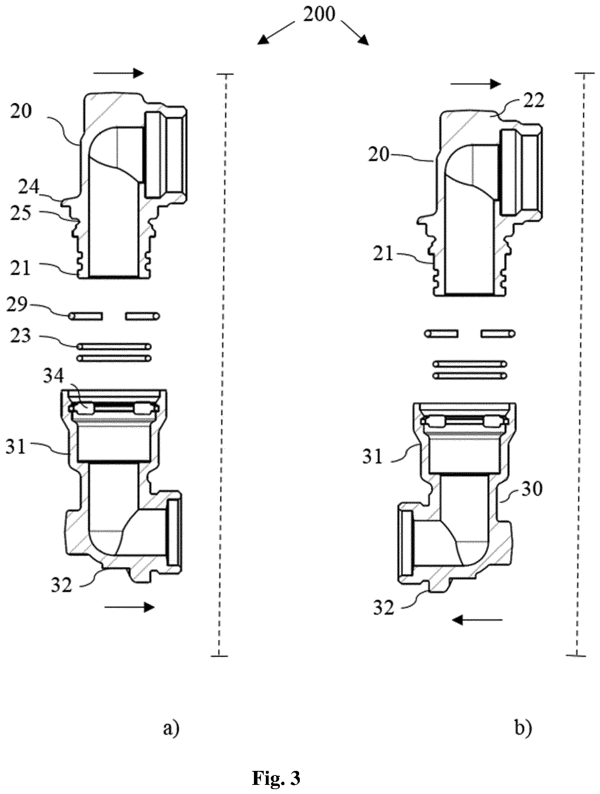

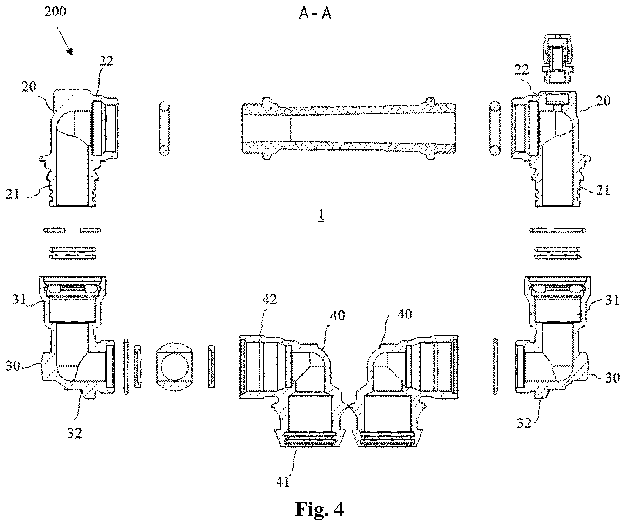

La présente invention propose un dispositif de raccordement d'eau perfectionné pour faciliter son installation, notamment au moyen d'une robinetterie modulable. Les figures 2 et 4 illustrent une vue générale du dispositif 1 de raccordement selon l'invention, et la figure 3 illustre la robinetterie 200 modulable de l'invention. Le dispositif 1 de raccordement d'eau comporte des robinetteries 20 d'entrée et de sortie du compteur comportant respectivement, au moins deux parties coudées 20, 30 à position variable. Chaque partie coudée 20, 30 comporte une extrémité inclinée 22, 32 destinée à son raccordement au compteur ou au réseau d'eau, et une extrémité droite 21, 31 de liaison déterminant une partie intermédiaire et modulable de la robinetterie 200.

La robinetterie 200 de l'invention est très avantageuse en ce qu'elle permet de varier une position angulaire entre les parties coudées 20, 30 et de sorte que la robinetterie 200 puisse être visée au compteur d'eau par un mécanisme de rotation continue autour de l'axe horizontal du compteur. En effet, en modifiant une position angulaire de la partie coudée inférieure 30, il est possible d'éviter le blocage de la robinetterie avec le corps du compteur lors de son installation, et retourner ensuite cette partie coudée inférieure 30 à sa position d'utilisation.

À cette fin, les extrémités droites 21, 31 sont reliées entre elles de manière rotative et de sorte que la robinetterie 200 ait une position verrouillée, dite aussi d'utilisation fig. 3, incise a) et une position ouverte dite aussi d'installation fig. 3, incise b). Dans sa position verrouillée, la robinetterie 200 a une forme générale en « C » et les deux extrémités inclinées 22, 32 sont orientées vers un axe central de référence, et correspondant à un axe vertical du compteur d'eau (illustré en lignes pointillées sur la figure 3). Dans sa position ouverte, l'une des parties inclinées 22 est orientée vers l'axe central et l'autre partie inclinée 32 est orientée vers un côté opposé audit axe central.

Dans un mode de réalisation préférée, une partie coudée supérieure 20 des robinetteries est destinée à son raccordement aux sorties horizontales filetées du compteur, et une partie coudée inférieure 30 est modulable par rapport à ladite partie coudée supérieure. L'extrémité inclinée 22 de la partie coudée supérieure 20 est donc pourvue d'un taraudage et d'un joint torique 23 pour sa liaison aux sorties filetés du compteur d'eau. D'autre part, l'extrémité droite 21 de ladite partie coudée supérieure 20 comporte des moyens de raccordement complémentaires avec l'extrémité droite 31 de la partie coudée inférieure 30.

Selon le mode de réalisation illustré fig. 1 et fig. 2, l'extrémité droite 21 de la partie coudée supérieure 20 est une extrémité de liaison mâle comportant des gorges extérieures, une première gorge 25 pour recevoir une bague de retenue à pression 29 (i.e. circlip) et une paire des gorges 26 pour recevoir des joints d'étanchéité. L'extrémité droite 31 de la partie coudée inférieure 30 est une extrémité de liaison femelle, recevant ladite partie coudée supérieure 20, et de préférence, hébergeant ladite bague de retenue 29 au niveau d'une ou plusieurs fenêtres 34 autour d'une gorge intérieure 35. Il ainsi possible d'avoir un accès à ladite bague de retenue 29 lorsque les parties coudées supérieure 20 et inférieure 30 sont assemblées, et de sorte à permettre son démontage éventuel.

Les deux parties coudées 20, 30 sont ainsi emboîtées jusqu'à un épaulement 24 de l'extrémité droite 21 de la partie coudée supérieure 20. Dans un mode de réalisation, la partie coudée supérieure 20 et la partie coudée inférieure 30 comportent au moins une paire de butées 27, 37 arrêtant la rotation de la liaison rotative dans la position verrouillée en « C » de la robinetterie. Une première butée 27 supérieure est située au niveau l'épaulement 24 de la partie supérieure de la robinetterie face au centre axial du compteur, et arrête une deuxième butée 37 extérieure située sur la partie coudée inférieure 30 de la robinetterie.

De préférence, la robinetterie 200 comporte également une deuxième paire de butées arrêtant la liaison rotative dans la position ouverte.

L'invention est très avantageuse en ce que la partie coudée supérieure 20 et la partie coudée inférieure 30 des robinetteries 200 peuvent être assemblées lors de sa fabrication. L'installation par l'utilisateur final est donc simplifiée et n'a pas besoin des outils ou des mouvements fastidieux. Pour effectuer le raccordement de chaque robinetterie 200 au compteur, il suffira de disposer la robinetterie en position ouverte, par une simple rotation de la partie coudée inférieure 30. En position ouverte, la liaison aux sorties filetées horizontales du compteur d'eau se fait au moyen d'un mouvement de rotation autour de l'axe horizontal de ladite sortie, et de sorte à serrer la partie coudée supérieure 20 sur ladite sortie filetée. L'installation a donc uniquement besoin des mouvements de rotation simples et sans besoin d'un outil particulier, autant pour la liaison au compteur que pour la sélection d'une position de la robinetterie 200.

Selon le mode de réalisation illustré, le raccordement des robinetteries 200 au réseau d'eau est fait au moyen d'un module 40 de liaison. Ledit module correspond également à une troisième partie coudée du dispositif 1 de raccordement d'eau et comporte donc une partie droite 41 et une partie inclinée 42. La partie droite 41 du module comporte un taraudage complémentaire d'un filetage de l'entrée ou sortie du réseau d'eau. Lors de l'installation, la partie droite du module est donc serrée sur une entrée ou une sortie du réseau d'eau et il est raccordé ensuite à la robinetterie par son extrémité inclinée 42. Dans un mode de réalisation préféré, l'extrémité inclinée 41 du module 40 recevant la partie coudée inférieure 30 de la robinetterie 200 comporte de moyens de raccordement automatiques coopérant avec l'extrémité inclinée 32 de la partie coudée inférieure 30. Par exemple, la partie coudée inférieure 30 est glissée et clipsée avec la sortie de la partie inclinée 42 du module 40. Bien entendu, tout autre moyen de raccordement automatique, et sans besoin de rotation, peut être utilisé pour relier les modules et les robinetteries.

Il est ainsi obtenu une robinetterie à position angulaire variable et permettant une installation aisée de ladite robinetterie sur un compteur d'eau aux sorties horizontales, et aux arrivées d'eau verticales.

## Revendications

1. Dispositif (1) de raccordement pour compteur d'eau aux sorties horizontales, ledit dispositif comportant au moins une robinetterie (200) comprenant deux parties coudées (20, 30), chaque partie coudée (20, 30) comportant une extrémité inclinée (22, 32) destinée à son raccordement au compteur ou au réseau d'eau, et une extrémité droite (21, 31) de liaison, dans lequel les deux extrémités droites (21, 31) des parties coudées (20, 30) sont reliées entre elles au moyen d'une liaison rotative étanche permettant de moduler une position de la robinetterie (200), dans lequel la robinetterie (200) comporte une position d'utilisation dans laquelle les deux extrémités inclinées (22, 32) sont orientées vers un centre axial et vertical du compteur d'eau, et une position d'installation dans laquelle l'une des parties inclinées (22) est orientée vers ledit centre axial et l'autre partie inclinée (32) est orientée vers un côté opposé audit centre axial, **caractérisé en ce que** la robinetterie comporte :
- au moins une paire de butées (27,37) externes coopérant en butée entre elles pour arrêter et limiter une
rotation entre les parties coudées (20, 30), chaque extrémité droite (21, 31) des parties coudées comportant l'une desdites butées (27,37).

2. Dispositif de raccordement selon la revendication 1, dans lequel les extrémités droites (21, 31) de la robinetterie (200) sont emboîtées et fixées ensemble au moyen d'une bague de retenue (29) à pression.

3. Dispositif de raccordement selon la revendication 2, dans lequel l'une des extrémités droites (21) est une extrémité de liaison mâle comportant au moins une première gorge extérieure (25) pour recevoir ladite bague de retenue (29) à pression, et l'autre extrémité droite (31) est une extrémité de liaison femelle comportant au moins une fenêtre (34) permettant d'exposer une section de ladite bague de retenue (29) lorsque lesdites parties coudées (20, 30) sont emboîtées.

4. Dispositif de raccordement selon l'une des revendications précédentes, dans lequel l'une des parties coudées de la robinetterie, dite partie coudée supérieure (20), est destinée à son raccordement au compteur d'eau et son extrémité inclinée (22) est pourvue d'un taraudage.

5. Dispositif de raccordement selon l'une des revendications précédentes comportant un module (40) de liaison au réseau d'eau, et dans lequel ;
- l'une des parties coudées de la robinetterie dite partie coudée inférieure (30), est destinée à son raccordement au réseau d'eau et comporte de moyens de raccordement automatiques avec ledit module (40) de liaison dans son extrémité inclinée (32), et ;
- ledit module (40) comporte une extrémité inclinée (42) recevant l'extrémité inclinée (32) de la partie coudée inférieure (30) de la robinetterie, et une extrémité droite (41) pourvue d'un taraudage destiné à être serré sur une entrée ou une sortie du réseau d'eau.

6. Dispositif de raccordement selon l'une des revendications précédentes, dans lequel ladite au moins une paire de butées (27, 37) est configuré pour arrêter une rotation entre les parties coudées (20, 30) en position d'utilisation, et dans lequel lesdites butées sont de préférence situées sensiblement face au centre axial du compteur d'eau lorsque la robinetterie (200) est en position verrouillée.

7. Dispositif de raccordement selon l'une des revendications précédentes, dans lequel la robinetterie comporte une deuxième paire de butées coopérant pour arrêter une rotation entre les parties coudées (20, 30) en position d'installation, et de préférence étant située sensiblement opposée au centre axial du compteur d'eau lorsque la robinetterie est en position d'installation.

8. Dispositif de raccordement d'eau selon l'une des revendications précédentes, comportant une paire de robinetteries pourvues respectivement d'un module de liaison au réseau d'eau, et dans laquelle ledit dispositif de raccordement comporte une vanne (50) d'arrêt d'eau entre l'une des robinetteries (200) et son module (40) de liaison au réseau d'eau.

9. Dispositif de raccordement d'eau selon l'une des revendications précédentes, dans lequel les parties coudées (20, 30) présentent un angle de 90 °.

10. Poste d'eau équipé d'un dispositif de raccordement selon l'une des revendications précédentes.

## Patentansprüche

1. Anschlussvorrichtung (1) für einen Wasserzähler an die horizontalen Ausgänge, wobei die Vorrichtung mindestens eine Armatur (200) beinhaltet, die zwei gebogene Abschnitte (20, 30) umfasst, wobei jeder gebogene Abschnitt (20, 30) ein schräges Ende (22, 32), das zu dessen Anschluss an den Zähler oder an das Wassernetz bestimmt ist, und ein gerades Ende (21, 31) zum Verbinden beinhaltet, wobei die beiden geraden Enden (21, 31) der gebogenen Abschnitte (20, 30) anhand einer dichten Drehverbindung miteinander verbunden sind, die es ermöglicht, eine Position der Armatur (200) anzupassen, wobei die Armatur (200) eine Nutzungsposition beinhaltet, in der die beiden schrägen Enden (22, 32) zu einer axialen und vertikalen Mitte des Wasserzählers ausgerichtet sind, und eine Installationsposition, in der einer der schrägen Abschnitte (22) zur axialen Mitte ausgerichtet ist, und der andere schräge Abschnitt (32) zu einer der axialen Mitte gegenüberliegenden Seite ausgerichtet ist, **dadurch gekennzeichnet, dass** die Armatur beinhaltet:
- mindestens ein Paar an äußeren Anschlägen (27, 37), die auf Anschlag miteinander zusammenwirken, um eine Drehung zwischen den gebogenen Abschnitten (20, 30) anzuhalten und zu begrenzen, wobei jedes gerade Ende (21, 31) der gebogenen Abschnitte einen der Anschläge (27, 37) beinhaltet.

2. Anschlussvorrichtung nach Anspruch 1, wobei die geraden Enden (21, 31) der Armatur (200) anhand eines Druck-Halterings (29) aufgesteckt und befestigt sind.

3. Anschlussvorrichtung nach Anspruch 2, wobei eines der geraden Enden (21) ein Steckverbindungsende ist, das mindestens eine erste äußere Ausnehmung (25) beinhaltet, um den Druck-Haltering (29) aufzunehmen, und das andere gerade Ende (31) ein Hülsenverbindungsende ist, das mindestens ein Fenster (34) beinhaltet, welches es ermöglicht, eine Sektion des Halterings (29) offenzulegen, wenn die gebogenen Abschnitte (20, 30) aufgesteckt sind.

4. Anschlussvorrichtung nach einem der vorstehenden Ansprüche, wobei einer der gebogenen Abschnitte der Armatur, oberer gebogener Abschnitt (20) genannt, zu dessen Anschluss an den Wasserzähler bestimmt ist, und dessen schräges Ende (22) mit einem Innengewinde versehen ist.

5. Anschlussvorrichtung nach einem der vorstehenden Ansprüche, die ein Modul (40) zum Verbinden mit dem Wassernetz beinhaltet, und wobei:
- einer der gebogenen Abschnitte der Armatur, unterer gebogener Abschnitt (30) genannt, zu dessen Anschluss an das Wassernetz bestimmt ist, und automatische Anschlussmittel mit dem Modul (40) zum Verbinden in dessen schrägem Ende (32) beinhaltet, und;
- das Modul (40) ein schräges Ende (42) beinhaltet, welches das schräge Ende (32) des unteren gebogenen Abschnitts (30) der Armatur aufnimmt, und ein gerades Ende (41), das mit einem Innengewinde versehen ist, das dazu bestimmt ist, an einem Eingang oder einem Ausgang des Wassernetzes festgezogen zu werden.

6. Anschlussvorrichtung nach einem der vorstehenden Ansprüche, wobei das mindestens eine Paar an Anschlägen (27, 37) konfiguriert ist, um eine Drehung zwischen den gebogenen Abschnitten (20, 30) in Nutzungsposition anzuhalten, und wobei sich die Anschläge vorzugsweise im Wesentlichen gegenüber der axialen Mitte des Wasserzählers befinden, wenn die Armatur (200) in verriegelter Position ist.

7. Anschlussvorrichtung nach einem der vorstehenden Ansprüche, wobei die Armatur ein zweites Paar an Anschlägen beinhaltet, die zusammenwirken, um eine Drehung zwischen den gebogenen Abschnitten (20, 30) in Installationsposition anzuhalten und sich vorzugsweise im Wesentlichen entgegengesetzt zur axialen Mitte des Wasserzählers befinden, wenn die Armatur in Installationsposition ist.

8. Wasseranschlussvorrichtung nach einem der vorstehenden Ansprüche, die ein Paar an Armaturen beinhaltet, die jeweils mit einem Modul zum Verbinden mit dem Wassernetz versehen sind, und wobei die Anschlussvorrichtung ein Wasser-Absperrventil (50) zwischen einer der Armaturen (200) und deren Modul (40) zum Verbinden mit dem Wassernetz beinhaltet.

9. Wasseranschlussvorrichtung nach einem der vorstehenden Ansprüche, wobei die gebogenen Abschnitte (20, 30) einen Winkel von 90° aufweisen.

10. Wasserstation, die mit einer Anschlussvorrichtung nach einem der vorstehenden Ansprüche ausgestattet ist.

## Claims

1. A connection device (1) for a water meter with horizontal outlets, said device including at least one fitting (200) comprising two bent portions (20, 30), each bent portion (20, 30) including an inclined end (22, 32) intended for connection thereof to the meter or to the water network, and a straight connecting end (21, 31), wherein the two straight ends (21, 31) of the bent portions (20, 30) are connected to one another by means of a sealed rotary connection allowing to modulate a position of the fitting (200), wherein the fitting (200) includes a use position in which the two inclined ends (22, 32) are directed towards an axial and vertical center of the water meter, and an installation position in which one of the inclined portions (22) is directed towards said axial center and the other inclined portion (32) is directed towards a side opposite to said axial center, **characterized in that** the fitting includes:
- at least one pair of outer stops (27, 37) cooperating by mutual abutment to stop and limit a rotation between the bent portions (20, 30), each straight end (21, 31) of the bent portions including one of said stops (27, 37).

2. The connection device according to claim 1, wherein the straight ends (21, 31) of the fitting (200) are nested into one another and fastened together by means of a snap-fit retainer ring (29).

3. The connection device according to claim 2, wherein one of the straight ends (21) is a male connecting end including at least one first external groove (25) for receiving said snap-fit retainer ring (29), and the other straight end (31) is a female connecting end including at least one window (34) allowing to expose a section of said retainer ring (29) when said bent portions (20, 30) are nested into one another.

4. The connection device according to one of the preceding claims, wherein one of the bent portions of the fitting, so-called the upper bent portion (20), is intended for connection thereof to the water meter and its inclined end (22) is provided with a thread.

5. The connection device according to one of the preceding claims, including a module (40) for connection to the water network, and wherein
- one of the bent portions of the fitting, so-called the lower bent portion (30), is intended for connection thereof to the water network and includes means for automatic connection with said connection module (40) in its inclined end (32), and
- said module (40) includes an inclined end (42) receiving the inclined end (32) of the lower bent portion (30) of the fitting, and a straight end (41) provided with a thread intended to be clamped to an inlet or an outlet of the water network.

6. The connection device according to one of the preceding claims, wherein said at least one pair of stops (27, 37) is configured to stop a rotation between the bent portions (20, 30) in the use position, and wherein said stops are preferably located substantially opposite the axial center of the water meter when the fitting (200) is in the locked position.

7. The connection device according to one of the preceding claims, wherein the fitting includes a second pair of stops cooperating to stop a rotation between the bent portions (20, 30) in the installation position, and preferably being located substantially opposite to the axial center of the water meter when the fitting is in the installation position.

8. The water connection device according to one of the preceding claims, including a pair of fittings respectively provided with a module for connecting to the water network, and wherein said connection device includes a water shut-off valve (50) between one of the fittings (200) and its module (40) for connection to the water network.

9. The water connection device according to one of the preceding claims, wherein the bent portions (20, 30) have a 90° angle.

10. A water station equipped with a connection device according to one of the preceding claims.
